Europäisches Patentamt

European Patent Office

Office européen des brevets

(11) Publication number: **0 423 411 A1**

# EUROPEAN PATENT APPLICATION

(21) Application number: 89500107.1

(22) Date of filing: 17.10.89

(51) Int. Cl.5: **A61C 9/00**

(43) Date of publication of application:
**24.04.91 Bulletin 91/17**

(84) Designated Contracting States:
**AT BE CH DE FR GB GR IT LI LU NL SE**

(71) Applicant: **GETRI INSTRUMENTAL, S.A.**
**Avd. de Oporto 38 local 5**
**ES-28024 Madrid(ES)**

(72) Inventor: **Gregorio Garcia, D. Oscar Rodolfo**
**Rio Manzanares, 31. bajo**
**E-28913 Leganes (Madrid)(ES)**

(74) Representative: **De la Fuente Fernandez,**
**Dionisio**
**Europatent, S.A. Santa Engracia num. 4-5**
**E-28010 Madrid(ES)**

(54) **Positioning stud for master models.**

(57) A positioning stud for master models, formed by a cylindrical body (1) , in which approximately one third of its length is threaded, this threaded area (2) being separated from the rest which is mooth, by a circular boss (3), to limit the threaded area being inserted in the master model concerned. The free end (5) of the stud is adequately shaped to fit the auxiliary tool used to place it in the model.

Fig. 2

## POSITIONING STUD FOR MASTER MODELS

At present, positioning studs in master models for dental prostheses and the like are used as simple smooth shanks, which are adapted and placed in the holes corresponding to the model, by using an adhesive or glue.

This requires, on the one hand, the use of a very fast-drying adhesives, to ensure that they are secured completely and quickly, and on the other hand, great care in placing them, so that they do not slant. This implies a combination of special care, firstly speed and then accuracy, which are difficult to combine. This means that there are always disadvantages in using these smooth shanks, which are normally utilised.

In order to overcome these difficulties and obtain an easy-to-place positioning stud, which is accurate and whose special features make it an instrument offering considerable advantages in this type of work, the positioning stud referred to in this Specification has been designed, which in essence has a threaded area, limited from the rest by a small boss, intended to be inserted mechanically into the hole previously made in the model, without needing any type of glue, being perfectly secured, and leaving the rest of the smooth shank to be included in its pertinent place. To assist screwing this shank, its end is shaped like a tongue or groove to apply the respective auxiliary tool to be used.

A detailed description will be made below of the positioning stud for the master models quoted, with reference to the attached drawing, in which a preferred form of embodiment is shown, simply by way of example and not limiting, liable to any variations in detail which do not involve fundamentally altering its essential features.

In this drawing the following is illustrated :

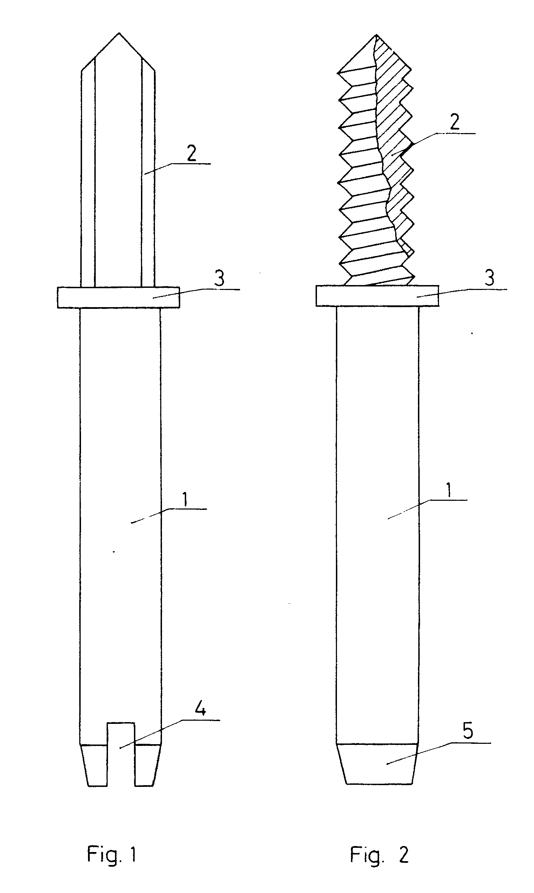

Figure 1 is an elevation view of a stud with a groove in the end.

Figure 2 is an elevation view of stud with a sheetlike end.

According to the example of embodiment illustrated, the posi tioning stud for master models preconised, comprises a cylindrical body (1) with a suitable diameter, in which about one third of its length has been provided with a threaded area (2), specifically designed for each particular case; a boss (3) separates the threaded area from the smooth area, said boss having a slightly larger diameter than the stud, so that it forms a stop when inserted.

The end of the smooth area is designed so that it forms a diametrical groove (4), or a sheetlike area (5) or any other shape, such as a star, for example, where the suitable auxiliary screwing tool fits.

The stud made in this way is placed in the base of the plaster positive, in which holes have previously been made with a suitable diameter for the threaded area (2) to be inserted in them through their screw pitch, therefore being perfectly secured to the stud by a screwthreaded system, without any type of glue whatever.

After the studs have been placed in the said plaster positive, on the smooth area (1), the respective parts corresponding to the model concerned in each case are fitted.

The fact of eliminating glues, ensuring a perfectly secure fit by screwing and the possibility of removing the studs when required to be used elsewhere, are undoubtable advantages over studs used at present, which cannot be re-used, as they are secured by glues, nor can the point of application, once in place, be corrected.

The shape, materials and dimensions can be varied and generally whatever is accessory and secondary, provided this does not alter, change or modify the essential nature of the object disclosed.

## Claims

1.- A positioning stud for master models, characterised by being made up of a cylindrical body of suitable diameter, in which approximately one third of its length is threaded with a suitable screw pitch, there being a circular boss between the threaded and smooth area, like a stop limiting the stud inserted in its place of action, and the free end of the stud being suitably shaped to fit the auxiliary tool used for screwing it.

Fig. 1

Fig. 2

European Patent Office

**EUROPEAN SEARCH REPORT**

Application Number

EP 89 50 0107

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | EP-A-0 126 850 (SCHEU-DENTAL) <br> * Page 10, lines 1-24; figure 8 * | 1 | A 61 C 9/00 |
| A | DE-A-3 807 591 (MACK) <br> * Column 2, lines 57-67; figure 1 * | 1 | |

| | |
|---|---|
| | TECHNICAL FIELDS SEARCHED (Int. Cl.5) |
| | A 61 C |

The present search report has been drawn up for all claims

| Place of search | Date of completion of the search | Examiner |
|---|---|---|
| THE HAGUE | 11-06-1990 | VANRUNXT J.M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)